# EUROPEAN PATENT APPLICATION

(11) **EP 1 657 912 A2**
(43) Date of publication of application: **17.05.2006**
(21) Application number: 05109286.4
(22) Date of filing: 06.10.2005
(51) Int. Cl.: H04N 5/00

(54) **Information processing apparatus that receives broadcast program data**

(30) Priority: 10.11.2004 JP 2004326832
(71) Applicant: KABUSHIKI KAISHA TOSHIBA, Tokyo 105-8001 (JP)
(72) Inventor: Nishimoto, Yoshinori Toshiba Corp. Int. Prop. Div., Tokyo, 105-8001 (JP)
(74) Representative: Henkel, Feiler & Hänzel

(57) **Abstract**

An information processing apparatus includes a receiver (201, 202) which receives a stream in which a plurality of compression-encoded broadcast program data are multiplexed, a processor (101), a bus, a filter circuit (506) which extracts, based on packet identifiers of the packets included in the received stream, packets corresponding to broadcast program data to be viewed/listened to, from among the packets that are included in the received stream, an encryption unit (507) which encrypts the extracted packets by an encryption key, and outputs a stream including the encrypted packets to the bus, and a decoder (701) that is composed of software and causes the processor (101) to execute a process for decrypting the stream, which is transferred from the encryption unit via the bus, by the encryption key, a process for separating the decrypted stream into audio data and video data, a process for decoding the audio data, and a process for decoding the video data.

## Description

The present invention relates generally to an information processing apparatus such as a personal computer, and more particularly to an information processing apparatus that is capable of receiving broadcast program data.

In recent years, personal computers having the same functions as audio/video (AV) devices, such as DVD (Digital versatile Disc) players and TV receivers, have been developed. Most of this kind of personal computers have TV functions for receiving and reproducing broadcast program data such as TV program data.

Jpn. Pat. Appln. KOKAI Publication No. 2003-153227 discloses a receiver that decodes and reproduces compression-encoded broadcast program data after descrambling received broadcast waves.

In the personal computer, however, if there is provided a dedicated receiver that executes all processes relating to reproduction of broadcast program data by hardware, a considerable increase in cost will occur.

On the other hand, if all processes relating to reproduction of broadcast program data are executed by software, the load on the software increases and such a problem as frame dropping may arise. In particular, in digital TV broadcast, a stream in which a plurality of broadcast program data are multiplexed is broadcast by broadcast waves. Consequently, the amount of data that flows on the bus of the computer increases, and this may considerably degrade the system performance.

The object of the present invention is to provide an information processing apparatus that is capable of assigning processes relating to reproduction of broadcast program data to hardware and software in a well-balanced fashion.

According to an embodiment of the present invention, there is provided an information processing apparatus comprising: a receiver which receives a stream in which a plurality of compression-encoded broadcast program data are multiplexed, the stream including packets corresponding to the plurality of broadcast program data, respectively; a processor which executes various programs; a bus which transfers various data; a filter circuit which extracts, based on packet identifiers of the packets included in the received stream, packets corresponding to broadcast program data to be viewed/listened to, from among the packets that are included in the received stream; an encryption unit which encrypts the extracted packets by an encryption key, and outputs a stream including the encrypted packets to the bus; and a decoder that is composed of software, which is executed by the processor, and causes the processor to execute a process for decrypting the stream, which is transferred from the encryption unit via the bus, by the encryption key, a process for separating the decrypted stream into audio data and video data, a process for decoding the audio data, and a process for decoding the video data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view that shows an external appearance of a computer according to an embodiment of the present invention;
FIG. 2 is a block diagram that shows a system configuration of the computer shown in FIG. 1;
FIG. 3 shows the structure of a TS packet that constitutes broadcast program data, which is received by the computer shown in FIG. 1;
FIG. 4 is a view for explaining a descramble process for broadcast content, which is executed by the computer shown in FIG. 1;
FIG. 5 is a block diagram that shows the structure of a copyright protection LSI, which is provided in the computer shown in FIG. 1;
FIG. 6 is a view for explaining a series of process procedures from reception to reproduction of terrestrial digital TV broadcast data, which are executed by the computer shown in FIG. 1;
FIG. 7 shows an example of a group of prescribed PID values, which are set in a PID table that is provided in the computer shown in FIG. 1; and
FIG. 8 is a circuit diagram that shows the structure of a PID filter unit, which is provided in the computer shown in FIG. 1.

An embodiment of the present invention will now be described with reference to the accompanying drawings.

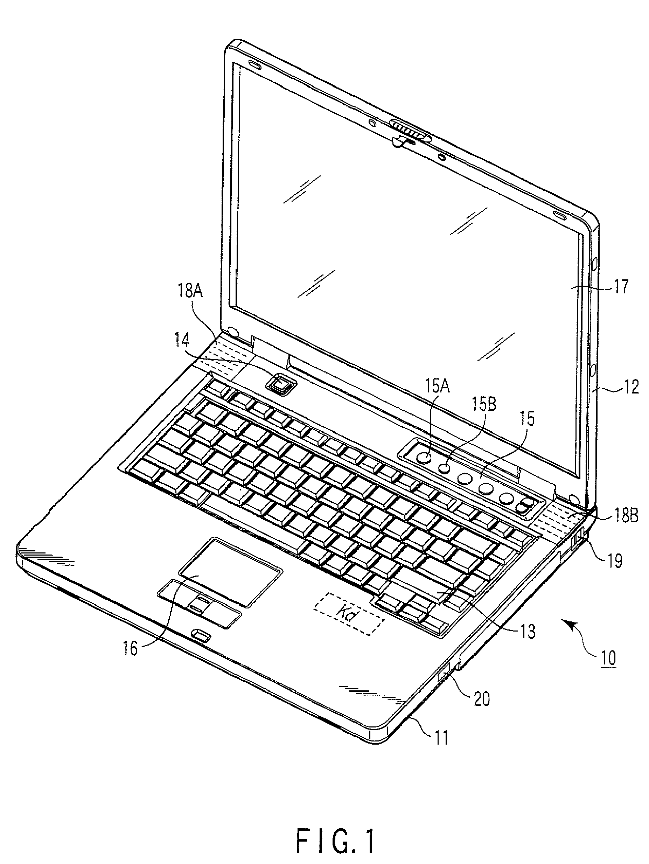

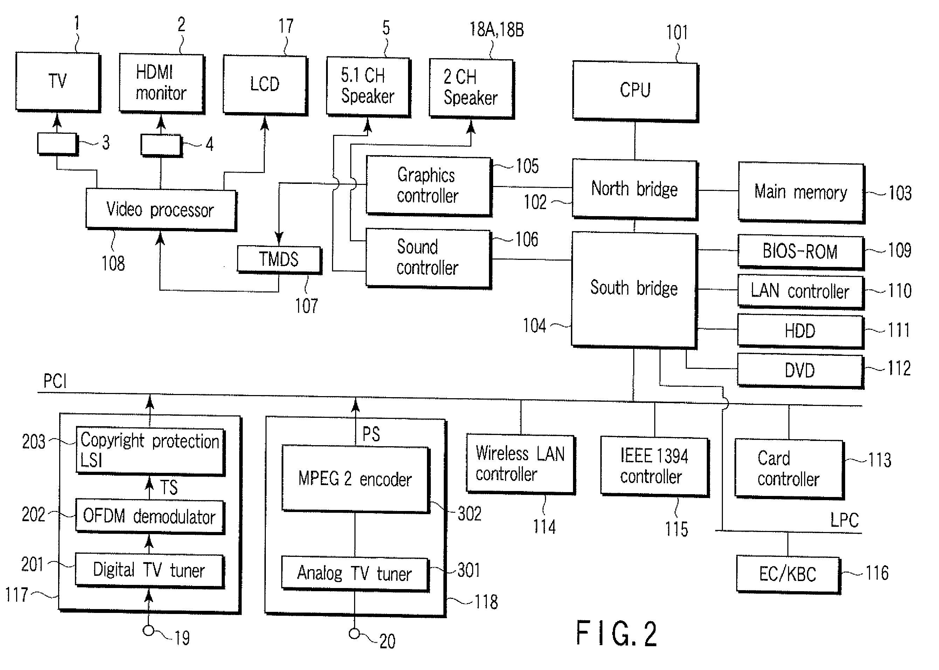

Referring to FIG. 1 and FIG. 2, the structure of an information processing apparatus according to an embodiment of the invention is described. The information processing apparatus is realized, for example, as a notebook personal computer 10.

FIG. 1 is a perspective view that shows the state in which a display unit of the notebook personal computer 10 is opened. The computer 10 comprises a computer main body 11 and a display unit 12. A display device that is composed of a TFT-LCD (Thin Film Transistor Liquid Crystal Display) 17 is built in the display unit 12. The display screen of the LCD 17 is positioned at an approximately central part of the display unit 12.

The display unit 12 is attached to the computer main body 11 such that the display unit 12 is freely rotatable between an open position and a closed position. The computer main body 11 has a thin box-shaped casing. A keyboard 13, a power button 14 for powering on/off the computer 10, an input operation panel 15, a touch pad 16, and speakers 18A, 18B are disposed on the top surface of the computer main body 11.

The input operation panel 15 is an input device that inputs an event corresponding to a pressed button. The input operation panel 15 has a plurality of buttons for activating a plurality of functions. The buttons include a TV activation button 15A and a DVD/CD activation button 15B. The TV activation button 15A is a button for activating a TV function for reproducing and recording TV broadcast program data. When the TV activation button 15A is pressed by the user, a TV application program for executing the TV function is started.

In this computer 10, a general-purpose main operating system and a purpose-specific sub-operating system for processing AV (audio/video) data are installed. The TV application program is a program that runs on the sub-operating system.

When the power button 14 is pressed by the user, the main operating system is booted up. On the other hand, when the TV activation button 15A is pressed by the user, the sub-operating system, and not the main operating system, is booted up, and the TV application program is automatically executed. The sub-operating system has only a minimum function for executing the AV function. The time that is needed to boot up the sub-operating system is much shorter than the time that is needed to boot up the main operating system. Thus, only by pressing the TV activation button 15A, the user can immediately execute TV viewing/recording.

The computer 10 can receive and reproduce both digital TV broadcast such as terrestrial TV broadcast, and analog TV broadcast such as terrestrial analog TV broadcast. An antenna terminal 19 for digital TV broadcast and an antenna terminal 20 for analog TV broadcast are provided on the right side of the computer 11. In the terrestrial digital TV broadcast, the content of broadcast program data is scrambled (encrypted). In order to handle the scrambled broadcast program data, the computer main body 11 incorporates a memory unit that prestores device identification information. The memory unit is included in a dedicated LSI for copyright protection of digital broadcast program data. The device identification information is used as a device key (Kd) that is necessary for descrambling the scrambled broadcast program data. The device identification information is an ID for identifying the computer 10, and is composed of information for identifying the model type of the computer 10 or information for identifying the manufacturer of the computer 10. Specifically, the device identification information is composed of a pair that comprises a model type ID for identifying the model type of the computer 10 and a device key Kd corresponding to the model type ID, or a pair that comprises a manufacturer ID for identifying the manufacturer of the computer 10 and a device key Kd corresponding to the manufacturer ID. Hereinafter, the model type ID and manufacturer ID are referred to as "device ID."

In the terrestrial digital TV broadcast, a stream in which a plurality of broadcast program data are multiplexed is broadcast by broadcast waves. The stream includes program content that is encrypted (scrambled) by a scramble key (Ks), common information that is obtained by encrypting the scramble key (Ks) by a work key (Kw), and some individual information items that are obtained by respectively encrypting the work key (Kw) by device identification information items (specifically, device keys (Kds)) that corresponds to authorized receivers. The common information is called ECM (Entitlement Control Message). The individual information is called EMM (Entitlement Management Message). Each of the EMMs in the stream includes the device ID that corresponds to the device key (Kd) used.

Using the ECM and EMMs included in the broadcast program data and the device key (Kd) incorporated in the computer main body 11, the computer 10 generates a scramble key (Ks) for descrambling (decrypting) the scrambled program content. In this case, the device key (Kd) is used in order to decrypt an EMM of the EMMs, which includes the device ID of the computer 10, and to generate a work key (Kw). The generated work key (Kw) is used in order to decrypt the ECM and to generate a scramble key (Ks).

As has been described above, in the computer 10, the device key (Kd) is stored in the memory unit within the dedicated LSI, which is built in the computer 10. The dedicated LSI is inaccessible from outside. Thus, leakage of the device key (Kd) can easily be prevented even without using a special tamper-resistant technique. Hence, copyright protection for broadcast program data can be realized without using a dedicated IC card such as B-CAS (BS Conditional Access System) card.

The DVD/CD activation button 15B is a button for reproducing video content that is recorded on a DVD or a CD. When the DVD/CD activation button 15B is pressed by the user, a video reproduction application program for reproducing video content is automatically started. The video reproduction application program, too, is an application program that runs on the sub-operating system. When the DVD/CD activation button 15B is pressed by the user, the sub-operating system, and not the main operating system, is booted up, and the video reproduction application program is automatically executed.

Referring now to FIG. 2, a system configuration of the computer 10 is described.

The computer 10 includes, as shown in FIG. 2, a CPU (Central Processing Unit) 101, a north bridge 102, a main memory 103, a south bridge 104, a graphics controller 105, a sound controller 106, a TMDS (Transition Minimized Differential Signaling) circuit 107, a video processor 108, a BIOS-ROM 109, a LAN controller 110, a hard disk drive (HDD) 111, a DVD drive 112, a card controller 113, a wireless LAN controller 114, an IEEE 1394 controller 115, an embedded controller/keyboard controller IC (EC/KBC) 116, a digital TV broadcast receiver 117, and an analog TV broadcast receiving processor 118.

The CPU 101 is a processor that controls the operation of the computer 10. The CPU 101 executes a main operating system/sub-operating system and various application programs, such as a TV application program, which are loaded from the hard disk drive (HDD) 111 into the main memory 103. The CPU 101 also executes a system BIOS (Basic Input/Output System) that is stored in the BIOS-ROM 109. The system BIOS is a program for hardware control.

The north bridge 102 is a bridge device that connects a local bus of the CPU 101 and the south bridge 104. The north bridge 102 includes a memory controller that access-controls the main memory 103. The north bridge 102 also has a function of executing communication with the graphics controller 105 via an AGP (Accelerated Graphics Port) bus, a PCI-Express serial bus, etc.

The graphics controller 105 is a display controller that controls the LCD 17, which is used as a display monitor of the computer 10. Video data that is generated by the graphics controller 105 is sent to the video processor 108 via the TMDS circuit 107. The video processor 108 executes a video process (image-quality adjusting process) for enhancing the image quality of video data from the graphics controller 105. The video data, whose image quality is enhanced by the video processor 108, is sent to the LCD 17. In addition, the video data, whose image quality is enhanced by the video processor 108, may be sent to an external TV 1 and an external HDMI (High-Definition Multimedia Interface) monitor 2 via interfaces 3 and 4 that are provided in the computer main body 11.

The south bridge 104 controls the devices on an LPC (Low Pin Count) bus, and the devices on a PCI (Peripheral Component Interconnect) bus. In addition, the south bridge 104 includes an IDE (Integrated Drive Electronics) controller for controlling the HDD 111 and DVD drive 112. The south bridge 104 also includes a function of executing communication with the sound controller 106.

The sound controller 106 is a sound source device and outputs audio data to be reproduced to the speakers 18A and 18B or an external 5.1 channel speak system.

The card controller 113 controls cards such as a PC card and an SD (Secure Digital) card. The wireless LAN controller 114 is a wireless communication device that executes wireless communication according to, e.g. IEEE 802.11 standard. The IEEE 1394 controller 115 executes communication with an external device via an IEEE 1394 standard serial bus. The embedded controller/keyboard controller IC (EC/KBC) 116 is a 1-chip microcomputer in which an embedded controller for power management and a keyboard controller for controlling the keyboard (KB) 13 and touch pad 16 are integrated. The embedded controller/keyboard controller IC (EC/KBC) 116 has a function of powering on/off the computer 10 in response to the user's operation of the power button 14. Further, the embedded controller/keyboard controller IC (EC/KBC) 116 is capable of powering on/off the computer 10 in response to the user's operation of the TV activation button 15A or DVD/CD activation button 15B.

The digital TV broadcast receiver 117 is an apparatus that receives a digital broadcast program such as a terrestrial digital TV broadcast program, and is connected to the antenna terminal 19. The digital TV broadcast receiver 117, as shown in FIG. 2, includes a digital TV tuner 201, an OFDM (Orthogonal Frequency Division Multiplexing) demodulator 202 and a copyright protection LSI 203. The digital TV tuner 201 and OFDM demodulator 202 function as a tuner module that receives broadcast program data of terrestrial digital TV broadcast. In the terrestrial digital TV broadcast, MPEG2 is used as a compression-encoding scheme for respective broadcast program data (video, audio). In addition, standard-resolution SD (Standard Definition) and high-resolution HD (High Definition) are usable as video formats.

The tuner module comprising the digital TV tuner 201 and OFDM demodulator 202 receives a broadcast signal of a specified channel, from among TV broadcast signals that are input from the antenna terminal 19. The tuner module extracts a transport stream (TS) from the received TV broadcast signal. The transport stream is a stream in which a plurality of compression-encoded broadcast program data are multiplexed. In the terrestrial digital TV broadcast, a plurality of programs are multiplexed in each channel (physical channel).

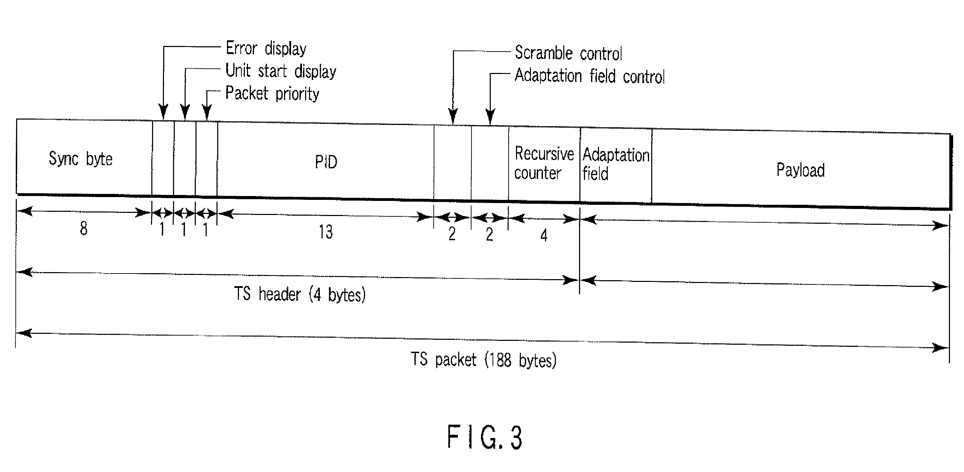

The transport stream includes EMMs and ECM, as well as broadcast content that is scrambled by the scramble key (Ks). The transport stream comprises a plurality of successive TS packets. Each TS packet is a fixed-length packet of 188 bytes, as shown in FIG. 3. The TS packet is composed of a header and a payload. The size of the header is a 4-byte fixed length. The header includes a 13-bit-length packet ID (PID). The PID is a packet identifier for identifying the associated TS packet. The PID is used in order to identify information that is included in the payload of the associated TS packet. Specifically, the PID is used in order to identify a program, a content type (audio/video), EMM/ECM, and control information such as a program table. Each of the TS packets corresponding to the same broadcast program has a PID that is designated by a PID table associated with the broadcast program.

The copyright protection LSI 203 is a dedicated LSI for realizing copyright protection (RMP: Rights Management and Protection) of broadcast content. The copyright protection LSI 203 prestores a device ID and a device key Kd, which correspond to the computer 10. The copyright protection LSI 203 generates a scramble key (Ks) by using the ECM and EMMs included in the transport stream and the device key (Kd). Then, the copyright protection LSI 203 descrambles (decrypts) broadcast content by the scramble key (Ks).

The copyright protection LSI 203 has a PID filtering function for extracting TS packets, each including the PID corresponding to a target broadcast program, from the descrambled transport stream. The PID filtering function makes it possible to send only those of the TS packets included in the transport stream, which correspond to the broadcast program that is the object of viewing/listening/recording, to the TV application program. Thereby, the TV application program side does not need to execute the PID filtering process. Therefore, the load on the TV application program, that is, the load on the CPU 101, can be reduced. Moreover, since the PID filtering process is executed by the copyright protection LSI 203, the amount of data that flows to the PCI bus can greatly be reduced.

The copyright protection LSI 203 has a function of re-encrypting TS packets that are extracted by the PID filtering function. This encryption is effected by using an encryption key that is possessed as a common key by both the copyright protection LSI 203 and TV application program. This encryption key is a key that is different from the scramble key. By this encryption, the encrypted content can be transferred to the main memory 103 via the PCI bus. Thus, even if the program content is unlawfully extracted via the PCI bus, it is possible to prevent the extracted program content from being reproduced.

The analog TV broadcast receiver 118 is an apparatus that receives an analog broadcast program such as terrestrial analog TV broadcast program, and is connected to the antenna terminal 20. The analog TV broadcast receiver 118, as shown in FIG. 2, includes an analog TV tuner 301 and an MPEG2 encoder 302. The analog TV tuner 301 is a tuner module that receives an analog broadcast program, and receives a broadcast signal of a specified channel from among TV broadcast signals that are input from the antenna terminal 20. The broadcast program data that is received by the analog TV tuner 301 is sent to the MPEG2 encoder 302. The MPEG2 encoder 302 compression-encodes the broadcast program data by an MPEG2 encoding scheme, and generates a program stream (PS) in which compression-encoded video data and compression-encoded audio are multiplexed.

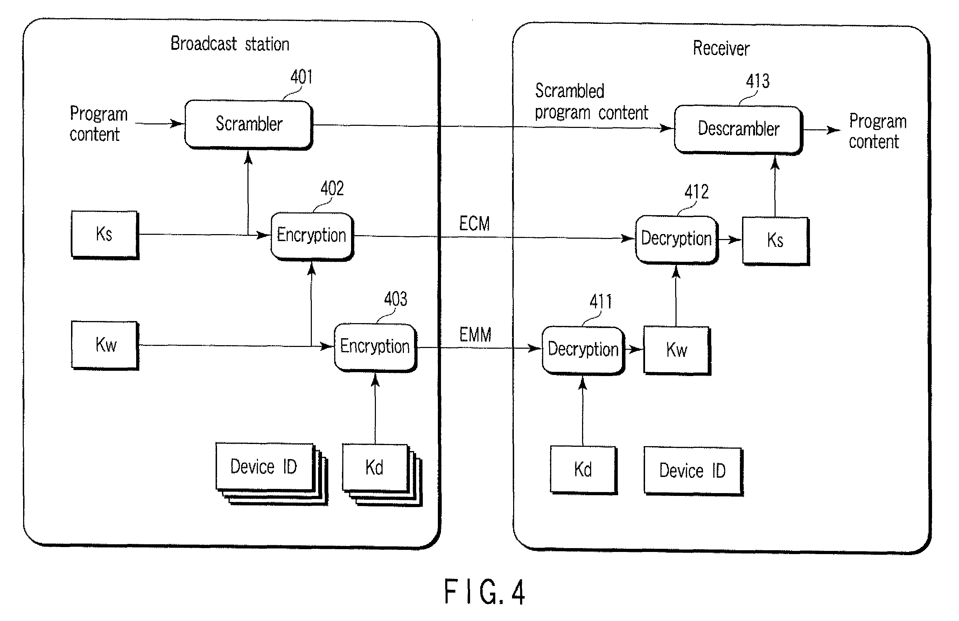

Next, referring to FIG. 4, the scheme for scrambling/descrambling broadcast content is explained.

A broadcast station is equipped with a scramble process unit 401 and encryption units 402 and 403. In the broadcast station, a pair of a device ID and a device key Kd is managed for each model type or each manufacturer of authorized receivers. The scramble process unit 401 encrypts (scrambles) broadcast program data (program content) by the scramble key Ks. The encryption unit 402 encrypts the scramble key Ks by a work key Kw, and generates an ECM that includes the encrypted scramble key Ks. The encryption unit 403 encrypts the work key Kw by a plurality of device keys Kd that correspond to a plurality of device IDs, and generates a plurality of EMMs including the plurality of encrypted work keys Kw. In this case, each EMM is accompanied with the device ID corresponding to the device key Kd, which is used for the encryption of the work key Kw. The encryption of the scramble key Ks and the encryption of the work key Kw are executed using, e.g. AES (Advanced Encryption Standard).

The copyright protection LSI 203 of the computer 10 includes an EMM decryption unit 411, an ECM decryption unit 412 and a descramble unit 413. The EMM decryption unit 411 decrypts the EMM by the device key Kd that is stored in the copyright protection LSI 203, thereby generating a work key Kw. In this case, the EMM decryption unit 411 identifies that one of the plural EMMs, which corresponds to the device ID of the computer 10, and decrypts the identified EMM by the device key Kd. The ECM decryption unit 412 decrypts the ECM by the generated work key Kw, thereby generating a scramble key Ks. The descramble unit 413 descrambles the program content by the generated scramble key Ks.

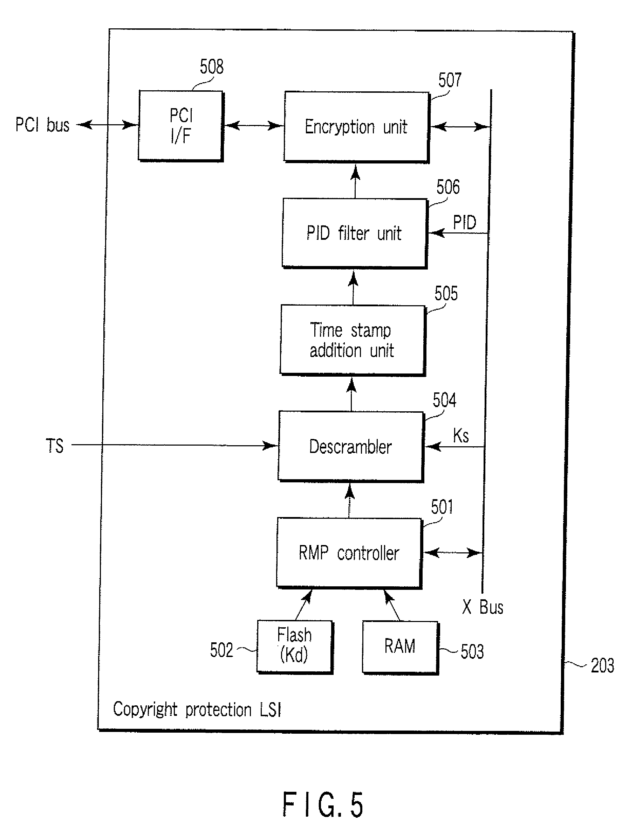

Next, referring to FIG. 5, a specific example of the structure of the copyright protection LSI 203 is described.

The copyright protection LSI 203, as shown in FIG. 5, comprises an RMP controller 501, a flash EEPROM 502, a RAM 503, a descrambler 504, a time stamp addition unit 505, a PID filter unit 506, an encryption unit 507, and a PCI interface unit 508.

The RMP controller 501 is a microcomputer that controls the operation of the copyright protection LSI 203, and executes a process for generating the scramble key Ks. The flash EEPROM 502 is a nonvolatile memory that stores the device key Kd and device ID together. The RAM 503 is used as a working memory of the RMP controller 501.

The descrambler 504 descrambles each scrambled TS packet by the scramble key Ks that is generated by the RMP controller 501. The descrambled TS packet is sent to the time stamp addition unit 505. The time stamp addition unit 505 adds a 4-byte-length time stamp to the head of the descrambled 188-byte-length TS packet, thus generating a 192-byte-length packet. The time stamp represents the temporal order of TS packets. Since the TS packet is converted by the time stamp addition unit 505 to the 192-byte-length packet with the time stamp, an encryption process by the encryption unit 507, which is to be described later, can efficiently be executed.

The PID filter unit 506 is a filter circuit that monitors the PID of each of the TS packets, thereby extracting only TS packets that are necessary for reproducing a program that is an object of viewing/listening. Specifically, on the basis of the PID of each of the TS packets that are included in the descrambled transport stream, the PID filter unit 506 extracts TS packets corresponding to the to-be-viewed/listened broadcast program data, from among the TS packets that are included in the transport stream. The to-be-viewed/listened program is designated by the CPU 101. Each packet extracted by the PID filter unit 506 is sent to the encryption unit 507.

The encryption unit 507 executes an encryption process for each of 192-byte-length packets. This encryption is executed using the same AES method as in the case of the encryption of ECM and EMM. The encryption unit 507 encrypts a 192-byte-length packet in units of a 128-bit-length block, using an encryption key of a block size = 128 bits. Specifically, the 192-byte-length packet is divided into twelve 128-bit-length blocks, and each of the 12 blocks is individually encrypted. Each encrypted TS packet with the time stamp is sent to the PCI interface unit 508.

The arithmetic circuit within the encryption unit 507, which supports the AES scheme, is also used for arithmetic operations for decrypting the ECM and EMM. To be more specific, the RMP controller 501 receives the EMM from the PID filter unit 506. Then, the RMP controller 501 inputs the EMM and device key Kd to the encryption unit 507, and causes the encryption unit 507 to execute a decryption process for the EMM. Thereby, RMP controller 501 can acquire the work key Kw from the encryption unit 507. In addition, the RMP controller 501 receives the ECM from the PID filter unit 506. Then, the RMP controller 501 inputs the ECM and work key Kw to the encryption unit 507, and causes the encryption unit 507 to execute a decryption process for the ECM. Thereby, RMP controller 501 can acquire the scramble key Ks from the encryption unit 507.

As has been described above, the RMP controller 501 executes the process for decrypting the EMM and ECM by using the encryption unit 507. Thereby, there is no need to mount an arithmetic circuit for AES encryption within the RMP controller 501, and the circuit configuration can be simplified.

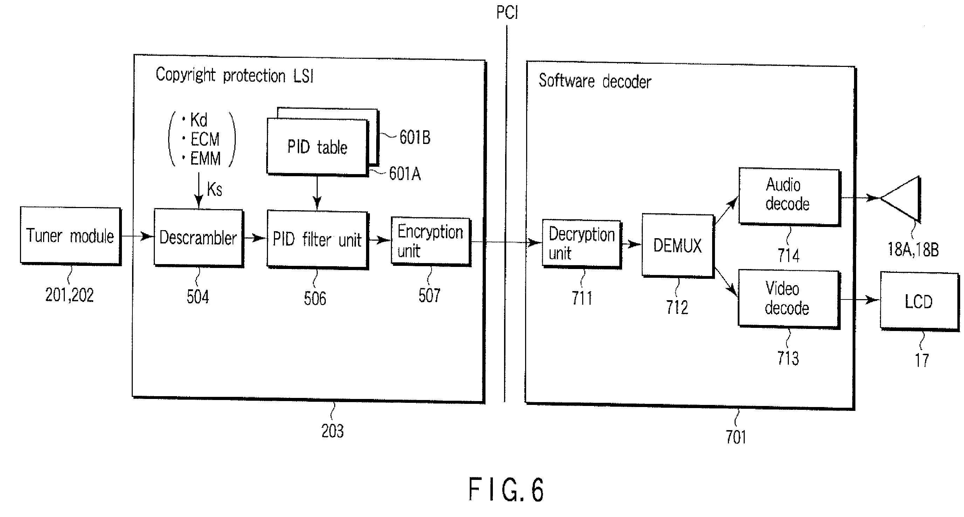

Next, referring to FIG. 6, a series of process procedures from reception to reproduction of terrestrial digital TV broadcast data are described.

The tuner module, which comprises the digital TV tuner 201 and OFDM demodulator 202, receives broadcast program data of terrestrial digital TV broadcast. The received broadcast program data, as mentioned above, is composed of the scrambled transport stream. The transport stream is sent to the copyright protection LSI 203.

In the copyright protection LSI 203, the transport stream is descrambled by the descrambler 504. The descrambling, as described above, is executed using the scramble key Ks that is generated on the basis of the ECM, EMM and device key Kd. Each descrambled TS packet is sent to the PID filter unit 506. The PID filter unit 506 has a PID table with 48 entries. Referring to the PID table, the PID filter unit 506 determines whether each of the TS packets from the descrambler 504 is a TS packet to be extracted, or not.

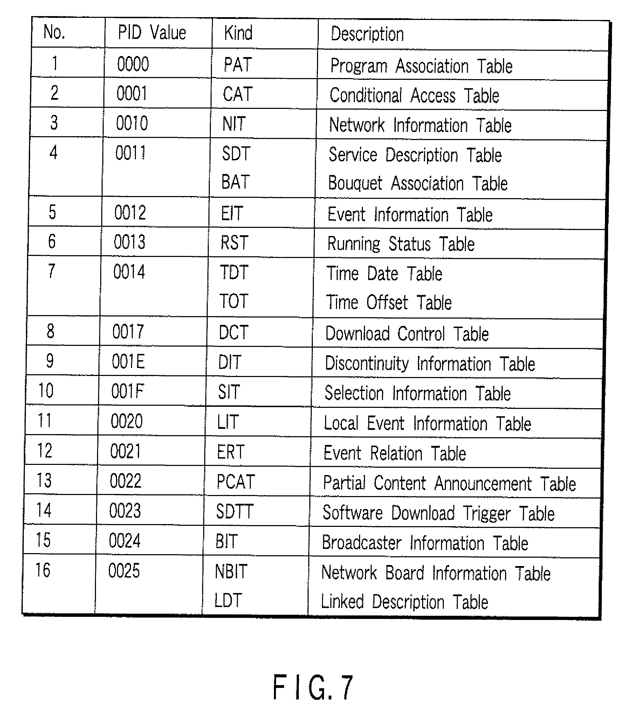

A plurality of packet identifiers for identifying packets corresponding to the to-be-viewed/listened broadcast program data are set in the PID table. Specifically, the PID table is composed of a PID table 601A that includes a plurality of prescribed PID values, and a PID table 601B that includes a plurality of designated PID values. The prescribed PID values are PID values that identify TS packets including various control information items that are prescribed according to the terrestrial digital TV broadcast standard. The PID table 601A, as shown in FIG. 7, includes 16 prescribed PID values. The designated PID values are PID values for identifying TS packets relating to the to-be-viewed/listened broadcast program. The designated PID values are set in the PID table 601B by the RMP controller 501.

Referring to the PID tables 601A and 601B, the PID filter unit 506 extracts, from the descrambled TS packets, TS packets that include a PID value agreeing with any one of the PID values set in the PID tables 601A and 601B. Specifically, the PID filter unit 506 compares the PID value included in the descrambled TS packet with each of the PID values set in the PID tables 601A and 601B, and determines whether the PID value included in the descrambled TS packet agrees with any one of the PID values set in the PID tables 601A and 601B. If the PID value agrees, the PID filter unit 506 sends the descrambled TS packet to the encryption unit 507.

As has been described above, the PID filter process is executed with reference to the PID tables 601A and 601B in which the PID values are set.
Thereby, the PID filtering process can be executed at high speed. In the meantime, the PID tables 601A and 601B may be realized by a single PID table.

The encryption unit 507 encrypts each TS packet, which is sent from the PID filter unit 506, and outputs the encrypted TS packet to the PCI bus. Thus, the partial transport stream, which includes only the encrypted TS packets relating to the to-be-viewed/listened broadcast program, is transferred to the main memory 103 via the PCI bus.

The TV application program includes a software decoder 701. The software decoder 701 is a program that causes the CPU 101 to execute reception and reproduction of the partial transport stream from the copyright protection LSI 203. The software decoder 701 comprises, as functional modules, a decryption unit 711, a demultiplexer 712, a video decoder 713 and an audio decoder 714.

The decryption unit 711 decrypts each TS packet included in the partial transport stream, using the encryption key that is shared by the copyright protection LSI 203 and the TV application program. The decrypted partial transport stream is sent to the demultiplexer 712. The demultiplexer 712 separates the decrypted partial transport stream into a TS packet group including video data and a TS packet group including audio data. Each of the TS packets including video data is sent to the video decoder 713, and each of the TS packets including audio data is sent to the audio decoder 714. The video decoder 713 decodes (decompresses) the video data. The decoded video data is displayed on the LCD 17. The audio decoder decodes (decompresses) the audio data. The decoded audio data is output to the speakers 18A and 18B.

In this manner, the partial transport stream including only the encrypted TS packets relating to the broadcast program to be viewed/listened to is transferred to the software decoder 701 from the copyright protection LSI 203. Thereby, the load on the CPU 101, which is needed for decoding and reproducing broadcast content, can be reduced. Moreover, the amount of data flowing on the PCI bus can greatly be reduced.

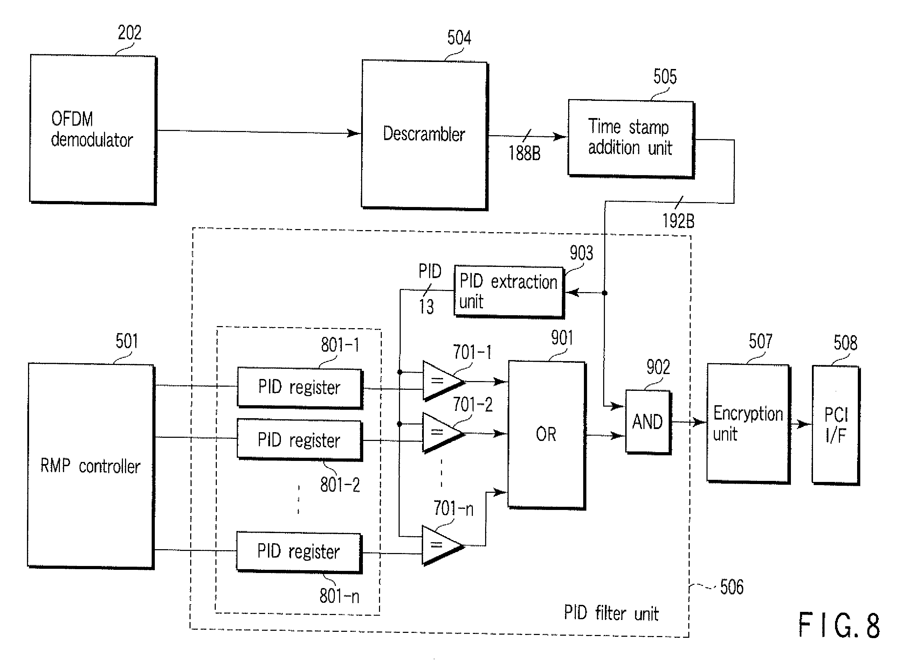

Next, referring to FIG. 8, the circuit structure of the PID filter unit 506 is described.

The PID filter unit 506 includes a plurality (e.g. 64) of PID registers 801-1 to 801-n, which constitute the above-described PID tables 601A and 601B. Each of the PID registers 801-1 to 801-n holds a 13-bit PID value that is set by the RMP controller 501. In addition, the PID filter unit 506 includes comparators 701-1 to 701-n, the number of which is equal to the number of PID registers 801-1 to 801-n, an OR circuit 901, an AND circuit 902, and a PID extraction unit 903.

Each 192-byte-length TS packet with the time stamp, which is output from the time stamp addition unit 501, is delivered to the PID extraction unit 903 and AND circuit 902. The PID extraction unit 903 extracts the 13-bit PID from the 192-byte-length TS packet with the time stamp. Each of the comparators 701-1 to 701-n compares the PID value, which is held in the associated PID register, with the PID value from the PID extraction unit 903. If the PID values agree, the comparator, 701-1 to 701-n, outputs a coincidence signal of logic "1". If the logic "1" coincidence signal is output from any one of the comparators 701-1 to 701-n, the AND circuit 902 outputs to the encryption unit 507 the 192-byte-length TS packet with the time stamp that is currently output from the time stamp addition unit 505.

As has been described above, in the present embodiment, the PID filter unit 506 within the copyright protection LSI 203 executes the packet filtering process. The stream comprising only the packets corresponding to the to-be-viewed/listened program is transferred from the copyright protection LSI 203 to the software decoder 701 via the PCI bus. Therefore, the process relating to the reproduction of the broadcast program data can be assigned to the hardware and software in a well-balanced fashion. Thereby, the reproduction of broadcast program data can efficiently be executed at a relatively low cost.

## Claims

1. An information processing apparatus **characterized by** comprising:
a receiver (201, 202) which receives a stream in which a plurality of compression-encoded broadcast program data are multiplexed, the stream including packets corresponding to the plurality of broadcast program data, respectively;
a processor (101) which executes various programs;
a bus which transfers various data;
a filter circuit (506) which extracts, based on packet identifiers of the packets included in the received stream, packets corresponding to broadcast program data to be viewed/listened to, from among the packets that are included in the received stream;
an encryption unit (507) which encrypts the extracted packets by an encryption key, and outputs a stream including the encrypted packets to the bus; and
a decoder (701) that is composed of software, which is executed by the processor (101), and causes the processor (101) to execute a process for decrypting the stream, which is transferred from the encryption unit via the bus, by the encryption key, a process for separating the decrypted stream into audio data and video data, a process for decoding the audio data, and a process for decoding the video data.

2. The information processing apparatus according to claim 1, **characterized in that** the filter circuit (506) includes:
a table in which a plurality of packet identifiers for identifying the packets, which correspond to the broadcast program data to be viewed/listened to, are set; and
a circuit that refers to the table and extracts, from the packets included in the received stream, packets including the packet identifier that agrees with any one of the packet identifiers set in the table.

3. The information processing apparatus according to claim 1, **characterized in that** the filter circuit (506) includes:
a table in which a plurality of packet identifiers for identifying the packets, which correspond to the broadcast program data to be viewed/listened to, and a plurality of packet identifiers for identifying the packets, which include control information for reproducing the broadcast program data to be viewed/listened to, are set; and
a circuit that refers to the table and extracts, from the packets included in the received stream, packets including the packet identifier that agrees with any one of the packet identifiers set in the table.

4. The information processing apparatus according to claim 1, **characterized in that** the filter circuit (506) includes:
a table in which a plurality of packet identifiers for identifying the packets, which correspond to the broadcast program data to be viewed/listened to, are set; and
a comparison circuit (701-1 to 701-n) that compares, with respect to each of the packets included in the received stream, the packet identifier included in the packet with each of the plurality of packet identifiers set in the table.

5. The information processing apparatus according to claim 1, **characterized in that** the filter circuit (506) includes:
a table in which a plurality of packet identifiers for identifying the packets, which correspond to the broadcast program data to be viewed/listened to, and a plurality of packet identifiers for identifying the packets, which include control information for reproducing the broadcast program data to be viewed/listened to, are set; and
a comparison circuit (701-1 to 701-n) that compares, with respect to each of the packets included in the received stream, the packet identifier included in the packet with each of the plurality of packet identifiers set in the table.

6. The information processing apparatus according to claim 1, **characterized in that** the packets included in the received stream are encrypted, and
the information processing apparatus further comprises a decryption unit (504) that decrypts the packets.

7. The information processing apparatus according to claim 1, **characterized in that** the stream, in which the packets corresponding to the plurality of broadcast program data are multiplexed, is a stream that is broadcast by digital TV broadcast.
